# EUROPEAN PATENT APPLICATION

(11) **EP 2 129 027 A1**
(43) Date of publication of application: **02.12.2009**
(21) Application number: 08722181.8
(22) Date of filing: 14.03.2008
(51) Int. Cl.: H04J 15/00, H04B 7/10, H04J 1/00, H04J 11/00, H04Q 7/38

(54) **BASE STATION DEVICE, USER DEVICE, AND METHOD IN MOBILE COMMUNICATION SYSTEM**

(30) Priority: 20.03.2007 JP 2007073726
(71) Applicant: NTT DoCoMo, Inc., Chiyoda-ku Tokyo 100-6150 (JP)
(72) Inventor: HIGUCHI, Kenichi, Tokyo 100-6150 (JP)
(74) Representative: HOFFMANN EITLE
(86) International application number: PCT/JP2008/054785
(87) International publication number: WO 2008/123028

(57) **Abstract**

A base station apparatus includes: a scheduling unit configured to determine resources to be assigned to one or more users requesting downlink communication; a unit configured to determine a PV applied to a plurality of antennas according to a feedback signal from each user apparatus; a communication scheme determination unit configured to determine for each user whether to perform feedback control of PV every predetermined number of resource blocks (RB) according to a downlink data amount requested by each user; and a unit configured to transmit a downlink signal from the plurality of antennas using resources determined by the scheduling unit. When the feedback control of PV is performed commonly for RBs in the system band, the communication scheme determination unit also determines whether to use delay diversity for downlink communication.

## Description

### TECHNICAL FIELD

The present invention relates to a base station apparatus, a user apparatus and a method in a mobile communication system.

### BACKGROUND ART

In this type of technical field, research and development for the next generation mobile communication scheme are being conducted at a high pace. 3GPP that is the standardization organization for W-CDMA is studying LTE (Long Term Evolution) as a communication scheme that becomes a successor of W-CDMA, HSDPA and HSUPA. In the LTE, as radio access schemes, it is planned to use the OFDM scheme for the downlink, and to use the SC-FDMA (Single-Carrier Frequency Division Multiple Access) for the uplink (refer to non-patent document 1, for example).

The OFDM (orthogonal frequency division multiplexing) scheme is a multicarrier scheme in which a frequency band is divided into a plurality of narrow frequency bands (subcarriers) to perform transmission by carrying data on each frequency band. By arranging the subcarriers densely on the frequency without interfering with each other while a part of them overlaps, high-speed transmission is realized and use efficiency of frequencies can be improved.

The single carrier FDMA (SC-FDMA) is a single carrier transmission scheme in which interference between terminals can be decreased by using frequency bands different among a plurality of terminals for transmission. Since SC-FDMA has characteristics in that variation of transmission power becomes small, low power consumption for terminals and wide coverage can be realized.

LTE is a system in which a plurality of user apparatuses share one or more physical channels in the uplink and the downlink for communication. The channel shared by the plurality of user apparatuses is generally called a shared channel. In LTE, uplink communication is performed by a physical uplink shared channel (PUSCH), and downlink communication is performed by a physical downlink shared channel (PDSCH).

In a communication system using these shared channels, it is necessary to signal information indicating which user apparatus is assigned the shared channel for each subframe (1 ms in LTE). A control channel used for the signaling is called physical downlink control channel (PDCCH) or downlink (DL) - L1/L2 control channel. Information of the physical downlink control channel includes, for example, downlink scheduling information, acknowledgement information (ACK/NACK), uplink scheduling grant, overload indicator, transmission power control command bit, and the like (refer to non-patent document 2, for example).

The downlink scheduling information and the uplink scheduling grant corresponds to the information for signaling which user apparatus is assigned the shared channel. The downlink scheduling information includes, for example, assignment information of resource blocks (RB) in downlink, ID of UE, the number of streams when MIMO is performed, information relating to precoding vector, data size, modulation scheme, information on HARQ (Hybrid Automatic Repeat reQuest) and the like, relating to the downlink shared channel. The uplink scheduling grant includes, for example, assignment information of uplink resources, ID of UE, data size, modulation scheme, transmission power information of uplink, information of demodulation reference signal in uplink MIMO and the like, relating to the uplink shared channel.

The multiple-input multiple-output (MIMO) scheme is communication of a multiple antenna scheme for realizing speed-up and/or quality enhancement of transmission signals by using a plurality of antennas for communication. Further, by copying streams of transmission signals and combining and transmitting the copied streams with proper weights, it becomes possible to transmit the signals to a communication partner using a directivity controlled beam. This is called a precoding scheme, and the weight used for the scheme is called a precoding vector.

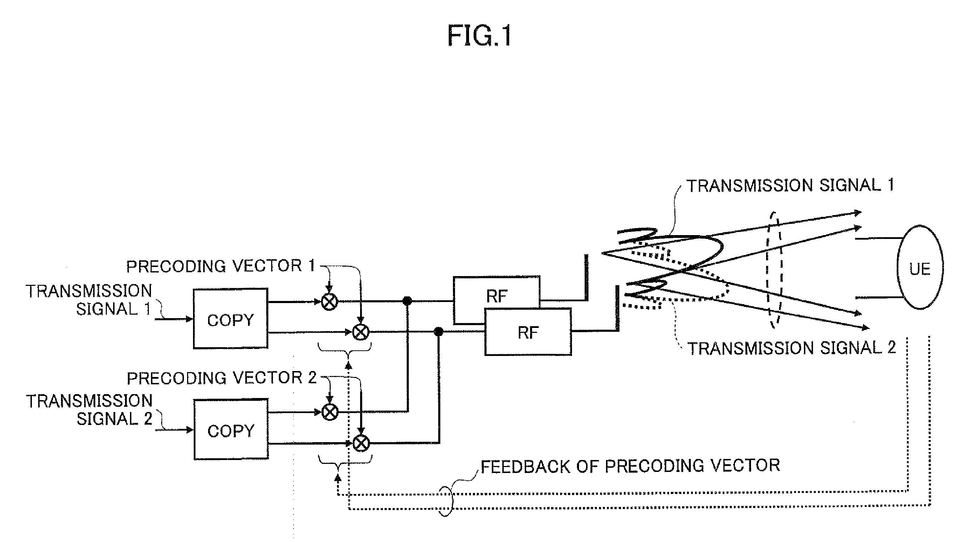

Fig.1 schematically shows a situation in which precoding is performed. Each of two streams (transmission signals 1 and 2) is copied by a copy unit into two routes. The signal of each route is multiplied by a precoding vector, then signals of the routes are combined and transmitted. The precoding vector is adaptively controlled based on feedback from a reception side (user apparatus) such that the precoding vector becomes a properer value. As mentioned above, the OFDM scheme is used in the downlink in LTE, and a remarkably wide range of band is prepared for the system band. As a result, fading variation in the frequency axis direction may become large.

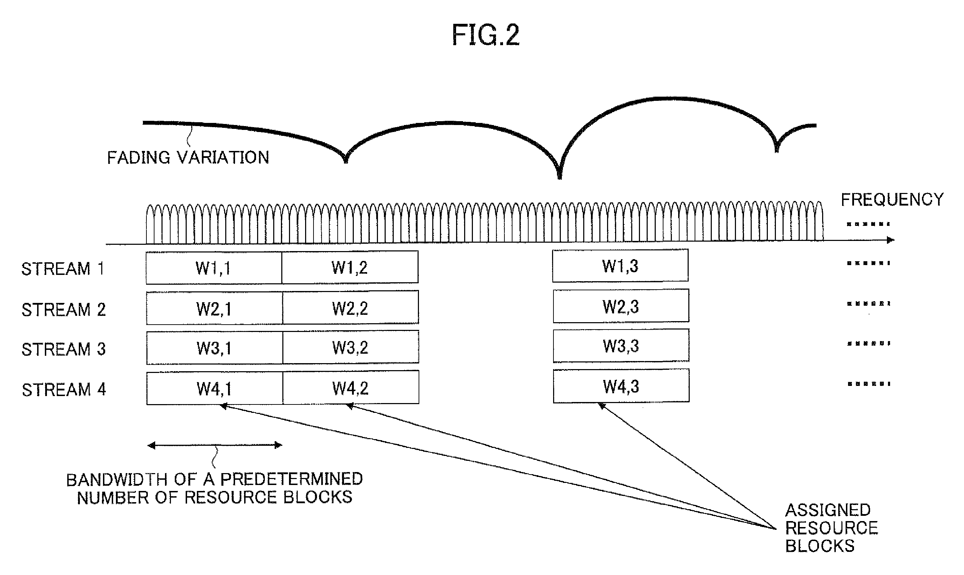

Fig.2 shows a manner in which fading variation is occurring in the frequency axis direction. The transmission signal (stream) is transmitted while being mapped to each subcarrier. In the example shown in the figure, it is assumed that four streams are transmitted. Since effects of fading are different depending on the frequency, it may be preferable to determine the precoding vector such that it fits the variation. For example, in the example shown in the figure, 25 resource blocks are included in the 5 MHz system band, and a different precoding vector is prepared every 5 resource blocks in each stream. In other words, as to a stream, a same precoding vector is applied to a frequency range of 5 resource blocks. By reducing the number of resource blocks to which a same precoding vector is applied, large fading variation can be supported. However, by doing that, it becomes necessary to prepare a large number of feedback control loops of the precoding vector, and control overhead becomes large. Especially, as to a user apparatus which is moving at high speed, trackability may be deteriorated due to signal processing delay.

On the other hand, a technique called delay diversity or cyclic delay diversity (CDD) is proposed. In this technique, the transmission signal is copied into signals the number of which is the same as that of antennas, and settings are made such that route delays from the copy unit to each antenna are intentionally different. A same signal is transmitted from each of the plurality of antennas at different timing. The reception side receives the signals as a plurality of paths, and combines them so that diversity effect can be expected.

Fig.3 shows an example in which the CDD scheme and the precoding scheme are applied to a two antenna system.
[Non-patent document 1] 3GPP TR 25.814 (V7.0.0), "Physical Layer Aspects for Evolved UTRA," June 2006
[Non-patent document 2] R1-070103, Downlink L1/L2 Control Signaling Channel Structure: Coding

### DISCLOSURE OF THE INVENTION

### PROBLEM TO BE SOLVED BY THE INVENTION

Fig.4 shows a manner in which fading variation is occurring in the frequency axis direction when transmission signals of four streams are transmitted in the downlink like the case shown in Fig.2. Since effects of fading are different depending on frequencies, it is desirable that delay amount of the CDD scheme is determined such that it fits the variation. However, the technology for determining the delay amount accurately from the above-mentioned viewpoint is not studied sufficiently.

By the way, a signal is multiplied by a weight in the precoding. This processing corresponds to providing a phase rotation to the signal in the frequency axis. In CDD, time delay is added on a particular copied sequence, and this also corresponds to applying phase rotation on the signal from the viewpoint of the frequency axis.

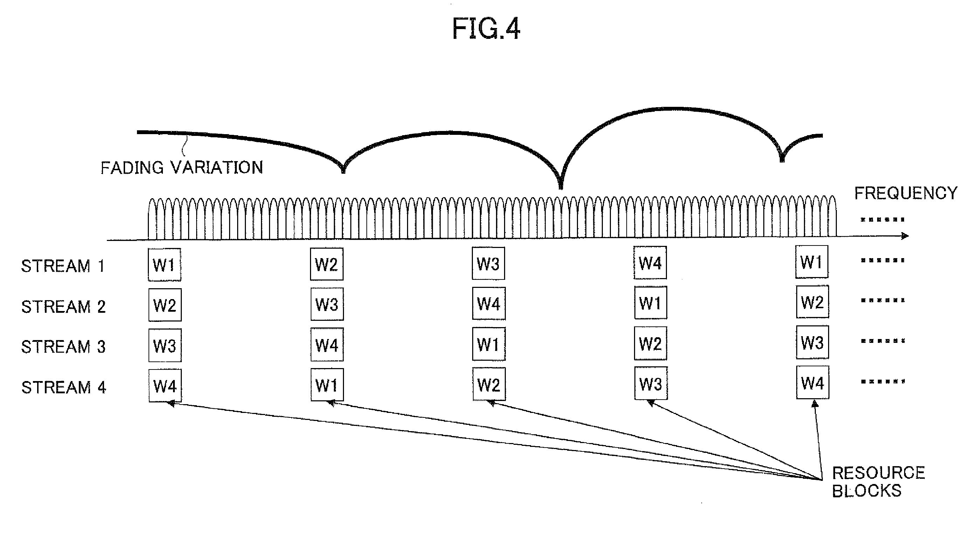

In the example shown in Fig.4, a situation is shown in which a weight corresponding to delay amount exists for each resource block for each stream. In the example shown in the figure, a weight w1 is applied to a first resource block for a stream 1, and w2 which is different from w1 by φ in phase is applied to another resource block. Similarly, w3 different from w1 by 2φ in phase is applied, and w4 different by 3φ is applied, for stream 1. For the sake of simplicity of explanation, the weight w2 applied to the first resource block in stream 2 is the same as the weight applied to the second resource block of stream 1.

Therefore, when combining the precoding scheme and the CDD scheme, precoding vector and the delay amount cannot be determined separately, and they need to be determined comprehensively. However, the technology for comprehensively determining the precoding vector and the delay amount from the above-mentioned viewpoint is not studied sufficiently.

As mentioned above, when the precoding vector is controlled excessively precisely, feedback control overload becomes excessively large, which affects throughput. In addition, when the delay amount in the CDD scheme is not properly set, transmission quality is deteriorated.

An object of the present invention is to improve feedback control overload for precoding vector and to improve transmission quality in a mobile communication system for supporting multiple antenna communication using the precoding scheme and supporting communication in which delay diversity is performed.

### MEANS FOR SOLVING THE PROBLEM

A base station apparatus used in the present invention is used in a mobile communication system that supports multiple antenna communication using a precoding scheme, and supports communication performing delay diversity. The base station apparatus includes:
a scheduling unit configured to determine resources to be assigned to one or more users requesting downlink communication;
a unit configured to determine a precoding vector applied to a plurality of antennas according to a feedback signal from each user apparatus;
a communication scheme determination unit configured to determine for each user whether to perform feedback control of precoding vector every predetermined number of resource blocks according to a downlink data amount requested by each user; and
a unit configured to transmit a downlink signal from the plurality of antennas using resources determined by the scheduling unit.

When the feedback control of the precoding vector is performed commonly for resource blocks in a system band, the communication scheme determination unit also determines whether to use delay diversity for downlink communication.

### EFFECT OF THE INVENTION

According to the present invention, feedback control overload for precoding vector can be improved and transmission quality can be improved in a mobile communication system for supporting multiple antenna communication using the precoding scheme and supporting communication in which delay diversity is performed.

### BRIEF DESCRIPTION OF THE DRAWINGS

Fig.1 is a diagram schematically showing a manner for performing precoding;
Fig.2 is a diagram showing a manner in which proper weight is set when fading variation occurs in the frequency axis direction;

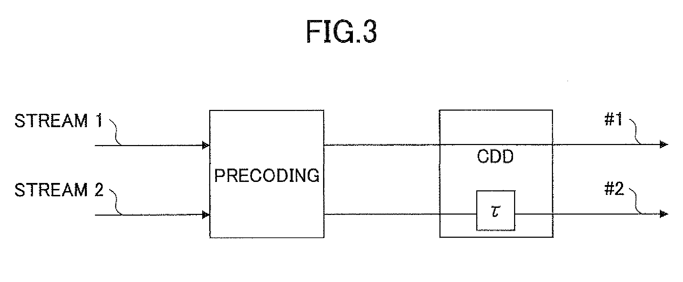

Fig.3 shows an example for applying the CDD scheme and the precoding scheme to two antenna system;
Fig.4 is a diagram showing a manner in which proper weight is set when fading variation occurs in the frequency axis direction;

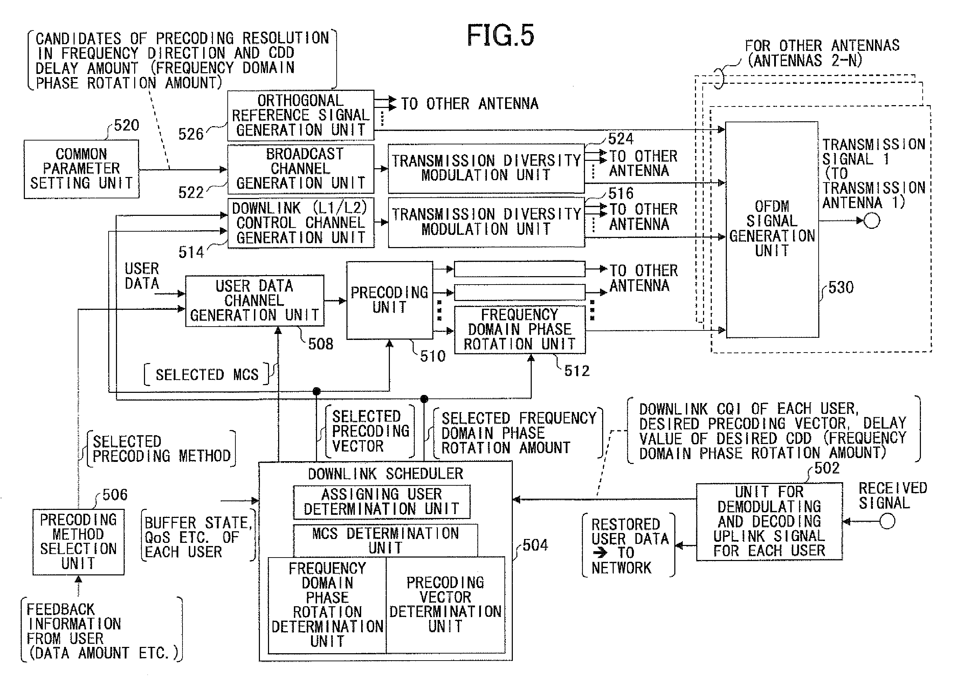

Fig.5 shows a block diagram of the base station apparatus according to an embodiment of the present invention;

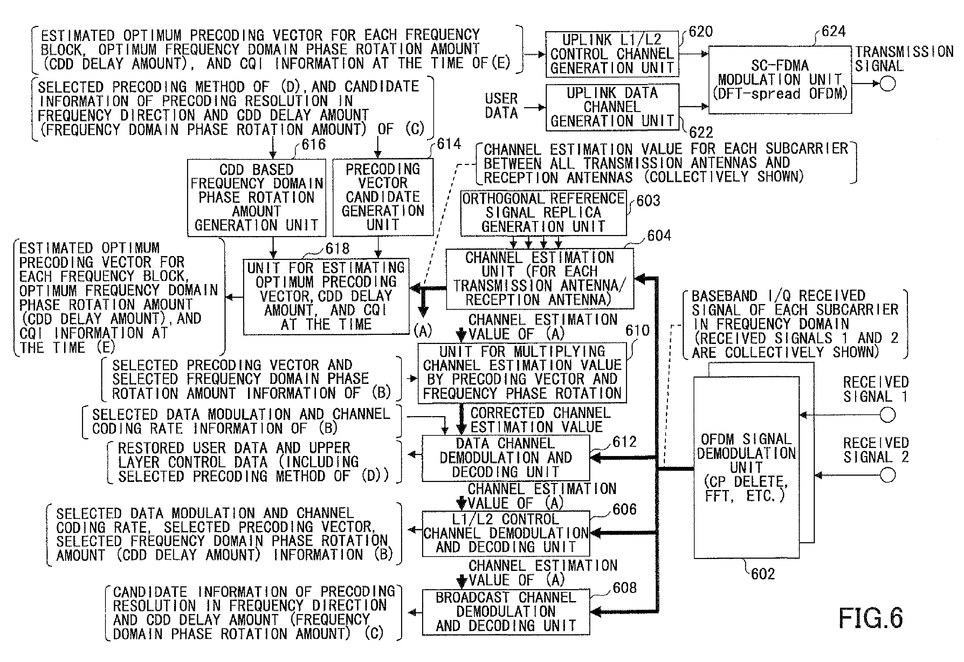

Fig.6 shows a block diagram of the user apparatus according to an embodiment of the present invention;

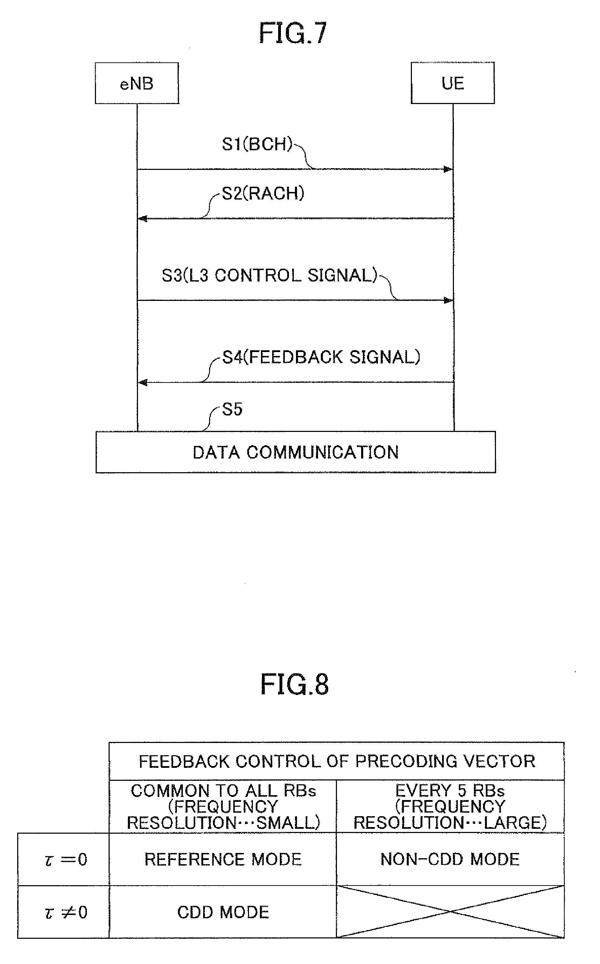

Fig.7 is a flowchart showing an operation example according to an embodiment of the present invention;
Fig.8 shows mutual relationship among three communication modes prepared in an embodiment of the present invention; and

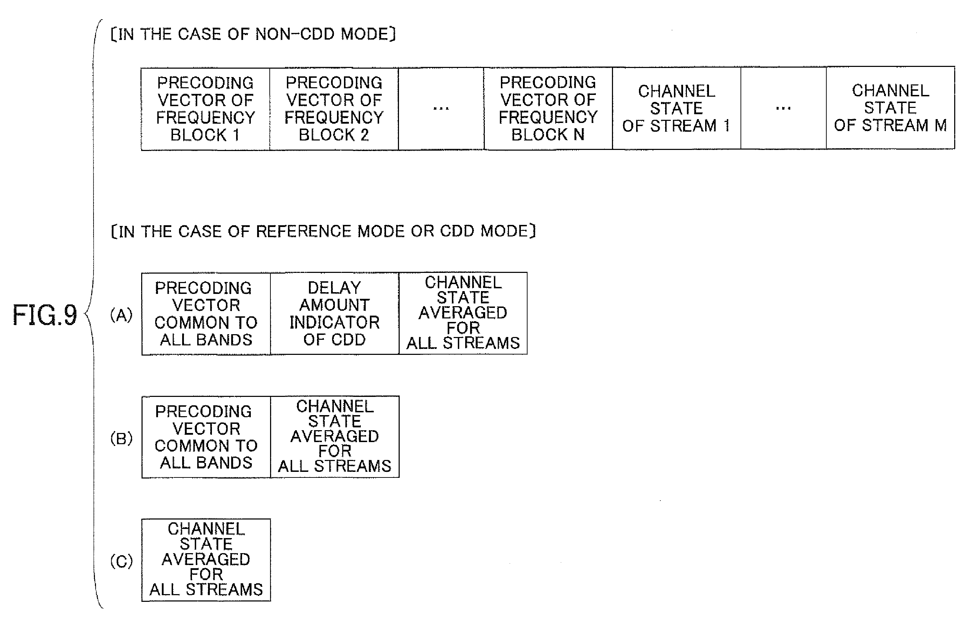

Fig.9 is a diagram showing contents of the feedback signal from the user apparatus to the base station apparatus.

### Description of reference signs

- 502: unit for demodulating and decoding for an uplink signal for each user
- 504: downlink scheduler
- 506: precoding method selection unit
- 508: user data channel generation unit
- 510: precoding unit
- 512: frequency domain phase rotation unit
- 514: downlink (L1/L2) control channel generation unit
- 516: transmission diversity modulation unit
- 520: common parameter setting unit
- 522: broadcast channel generation unit
- 524: transmission diversity modulation unit
- 526: orthogonal reference signal generation unit
- 530: OFDM signal generation unit
- 602: OFDM signal demodulation unit
- 603: orthogonal reference signal replica generation unit
- 604: channel estimation unit
- 606: L1/L2 control channel demodulation and decoding unit
- 608: broadcast channel demodulation and decoding unit
- 610: multiplying unit
- 612: data channel demodulation and decoding unit
- 614: precoding vector candidate generation unit
- 616: CDD based frequency domain phase rotation amount generation unit
- 618: estimation unit
- 620: uplink L1/L2 control channel generation unit
- 622: uplink data channel generation unit
- 624: SC-FDMA modulation unit

### PREFERRED EMBODIMENTS FOR CARRYING OUT THE INVENTION

Fig.5 shows a block diagram of a base station apparatus according to an embodiment of the present invention. Fig.5 shows a unit 502 for demodulating and decoding an uplink signal for each user, a downlink scheduler 504, a precoding method selection method 506, a user data channel generation unit 508, a precoding unit 510, a frequency domain phase rotation unit 512, a downlink (L1/L2) control channel generation unit 514, a transmission diversity modulation unit 516, a common parameter setting unit 520, a broadcast channel generation unit 522, a transmission diversity modulation unit 524, an orthogonal reference signal generation unit 526 and an OFDM signal generation unit 530.

The unit 502 for demodulating and decoding an uplink signal for each user demodulates and decodes a received uplink signal. The uplink signal may include not only a control channel and a data channel but also a random access channel (RACH). The demodulated and decoded data channel is transmitted to an upper network as user data. The control channel may include information (CQI) indicating received quality of the downlink reference signal, acknowledgement information (ACK/NACK) for data channel transmitted in downlink in the past, and the like. A signal for requesting communication that is RACH or other control channel includes values of various parameters necessary for the communication. Concrete examples of the parameters are transmission quality and transmission speed desired by the user, the number of streams desired by the user, precoding vector desired by the user, and delay amount (that may be a phase angle in frequency domain equivalent to delay amount) of CDD scheme desired by the user, and the like. The uplink control channel includes a feedback signal in the precoding scheme.

The downlink scheduler 504 plans radio resource assignment in the downlink based on information such as CQI reported from each user. The scheduler 504 includes an assigning user determination unit, a MCS determination unit, a precoding vector determination unit, and a frequency domain phase rotation determination unit.

The assigning user determination unit selects one or more users from among users desiring downlink communication based on superiority or inferiority of CQI and the like.

When adaptive modulation and channel coding (AMC) is performed, the MCS (Modulation and channel Coding Scheme) determination unit determines a data modulation scheme and a channel coding rate applied to the downlink data channel for the selected user. More particularly, a proper combination number (MCS number) is specified from among predetermined combinations of data modulation schemes and channel coding rates.

Based on the feedback signal from the user, the precoding vector determination unit determines a precoding vector used for downlink communication for the user. In the present embodiment, the precoding vector may be commonly set for all of the 25 resource blocks, for example, that are included in a system band such as 5 MHz, for example, or may be set such that the precoding vector is different every five resource blocks. The setting is determined by the precoding method selection unit 506. The system band may be not only 5 MHz but also various bands such as 10 MHz, 20 MHz and the like.

When the cyclic delay diversity (CDD) scheme is performed, the frequency domain phase rotation amount determination unit determines a delay amount that should be set for each of series to each antenna. The delay amount τ on the time axis corresponds to a phase rotation angle φ_{τ} on the frequency axis.

Based on information reported from the user, the precoding method selection unit 506 determines how to perform feedback control of the precoding vector in downlink communication for the user. Although information reported from the user is the data amount of downlink communication typically, other information may be referred to. In the present embodiment, two modes are prepared for the feedback control of the precoding vector. (1) In one mode, the feedback control is commonly performed for all resource blocks included in the system band. (2) In another mode, many feedback loops are prepared every predetermined number of consecutive resource blocks (every 5 resource blocks, for example) in resource blocks included in the system band. In the present embodiment, the mode of (1) is selected when the data amount of downlink communication requested by the user is relatively large, and the mode of (2) is selected when the data amount is relatively small. As described later, the latter mode is divided to a reference mode and a CDD mode.

The user data channel generation unit 508 generates a downlink data channel (PDSCH) for each user apparatus based on the selected MCS and the selected precoding method.

The precoding unit 510 replicates a data channel for a particular user into a plurality of series, applies a proper precoding vector (weight) to each of the plurality of series, and outputs each series.

The frequency domain phase rotation unit 512 provides a predetermined phase rotation to each of the plurality of signal series weighted by the precoding vector, and outputs the series. The predetermined phase rotation angle is set to be 0 when the cyclic delay diversity (CDD) scheme is not applied. When the CDD scheme is applied, the predetermined phase rotation angle is set to be a phase angle φ_{τ} corresponding to the delay amount τ in the CDD scheme.

The downlink (L1/L2) control channel generation unit 514 generates a downlink low layer control channel (L1/L2 control channel). The downlink L1/L2 control channel generally includes downlink or uplink scheduling information, MIMO information, acknowledgment information (ACK/NACK), retransmission control information (HARQ), transmission power control (TPC) command bit and the like. The downlink or uplink scheduling information specifies resource blocks of a data channel and an applied MCS and the like. In the example shown in the figure, the downlink L1/L2 control channel includes information of the selected precoding vector and a phase rotation amount in the case when the CDD scheme is applied.

The transmission diversity modulation unit 516 performs modulation for transmitting the downlink L1/L2 control channel from a plurality of antennas. As an example, the transmission diversity may be performed by the space time block coding (STBC), or may be performed by space frequency block coding (SFBC).

The common parameter setting unit 520 prepares parameters common to all users in the cell. Especially, in the present embodiment, precoding vector that is used or may be used in the cell, and delay amount (phase rotation amount) that is used or may be used in the cell are prepared.

The broadcast channel generation unit 522 generates a broadcast channel (BCH) including the precoding vector and/or the delay amount value prepared by the common parameter setting unit 520.

The transmission diversity modulation unit 524 performs modulation for transmitting the broadcast channel from the plurality of antennas. As an example, the transmission diversity may be performed by the space time block coding (STBC) or the space frequency block coding (SFBC).

The orthogonal reference signal generation unit 526 prepares a reference signal used in the cell.

The OFDM signal generation unit 530 generates a transmission signal of the OFDM scheme to be transmitted from an antenna by performing inverse fast Fourier transform and the like.

Fig.6 shows a block diagram of a user apparatus according to an embodiment of the present invention. Fig.6 shows an OFDM signal demodulation unit 602, an orthogonal reference signal replica generation unit 603, a channel estimation unit 604, a L1/L2 control channel demodulation and decoding unit 606, a broadcast channel demodulation and decoding unit 608, a multiplying unit 610, a data channel demodulation and decoding unit 612, a precoding vector candidate generation unit 614, a CDD based frequency domain phase rotation amount generation unit 616, an estimation unit 618, an uplink L1/L2 control channel generation unit 620, an uplink data channel generation unit 622, and a SC-FDMA modulation unit 624.

The OFDM signal demodulation unit 602 performs removal of guard interval and fast Fourier transform and the like so as to extract the reference signal, the broadcast channel, the downlink L1/L2 control channel, the data channel and the like from the received signal of the OFDM scheme.

The orthogonal reference signal replica generation unit 603 prepares a replica of the reference signal, and provides the replica to the channel estimation unit 604.

The channel estimation unit 604 performs channel estimation based on a received downlink reference signal for each of transmission antennas and/or reception antennas. For the sake of convenience of explanation, the channel estimation result is represented as "A".

The L1/L2 control channel demodulation and decoding unit 606 demodulates and decodes the downlink L1/L2 control channel based on the channel, estimation value. As mentioned above, although the L1/L2 control channel may include various pieces of information, the L1/L2 control channel demodulation and decoding unit 606 in the example shown in the figure extracts, from the L1/L2 control channel, information on MCS (selected data modulation scheme and channel coding rate), used precoding vector, and delay amount (corresponding to phase rotation amount in frequency domain) used when the CDD scheme is applied. For the sake of convenience of explanation, these pieces of information are represented as "B".

The broadcast channel demodulation and decoding unit 608 also demodulates and decodes the broadcast channel based on the channel estimation value. Although the broadcast channel may include various information, the broadcast channel demodulation and decoding unit 608 in the example shown in the figure, extracts, from the broadcast channel, information indicating "predetermined number" (precoding resolution in the frequency direction) used when the feedback control of the precoding vector is performed every predetermined number" of resource blocks, and extracts information indicating delay amount (phase rotation amount in frequency domain corresponding to that) when the CDD scheme is applied. For the sake of convenience of explanation, these pieces of information are represented as "C".

The multiplying unit 610 corrects the channel estimation value based on the information "B". More particularly, the multiplying unit 610 multiplies the channel estimation value by the precoding vector, and adds a phase rotation amount corresponding to the delay amount of the CDD scheme as necessary, so that the channel estimation value is corrected.

The data channel demodulation and decoding unit 612 demodulates and restores the data channel based on the corrected channel estimation value and the information "B". The data channel may include control data of upper layer in addition to reproduced user data. The control data may include information indicating a precoding vector control method determined for the user apparatus, for example. For the sake of convenience of explanation, the information is represented as "D".

The precoding vector candidate generation unit 614 prepares the precoding vector (determined value or candidate value) based on the information "C" and "D".

The CDD based frequency domain phase rotation amount generation unit 616 prepares the delay amount (determined value or candidate value) for each antenna when the CDD scheme is applied based on the information "C" and "D".

The estimation unit 618 estimates anticipated signal quality (CQI) based on values prepared by 614 and 616. When precoding vectors are prepared as options of some candidates in 614, an optimum candidate is selected from these. Also as to delay amount for applying the CDD scheme, when some of options of candidates are prepared in 614, an optimum candidate is selected from these. Then, the estimation unit 618 estimates an amount (CQI) indicating received signal quality anticipated if downlink communication is performed by using the optimum candidate of the receding vector and the delay amount (as necessary). When the precoding vector and/or the delay amount is not a value selected from options, but is a value uniquely determined by the base station, the estimation unit 618 estimates an amount (CQI) indicating received signal quality anticipated if downlink communication is performed by using the value. For the sake of convenience of explanation, "E" represents the precoding vector and the delay amount (as necessary) that are selected by the user apparatus or specified by the base station, and represents information indicating CQI anticipated if the values are used.

The uplink L1/L2 control channel generation unit 620 generates uplink L1/12 control channel including the information "E".

The uplink data channel generation unit 622 generates an uplink data channel including user data.

The SC-FDMA modulation unit 624 performs discrete Fourier transform, mapping in frequency domain, inverse Fourier transform and the like to generate a transmission signal of the single carrier scheme including the uplink control channel and data channel.

Fig.7 is a flowchart showing an operation example according to an embodiment of the present invention. For the sake of simplicity of drawing, procedures on radio resource assignment are not shown. As shown in step S1, a broadcast channel (BCH) is transmitted from the base station apparatus (eNB) to the user apparatus (UE). The broadcast channel includes various parameters used in the cell. Especially in the present embodiment, the broadcast channel includes information on precoding resolution in the frequency direction and the delay amount in CDD.

The user apparatus transmits a signal for requesting downlink communication in step S2. In the example shown in the figure, the signal is RACH. But, the signal is not limited to RACH, and any signal that requests communication can be used.

In step S3, a communication mode to be used for downlink communication is specified by an uplink layer control signal. More particularly, the uplink layer control signal includes information indicating whether feedback control of precoding vector performed in downlink communication with the user is performed every predetermined number of resource blocks or is performed commonly for all resource blocks of the system band, and includes information indicating whether the CDD scheme is used when the feedback control of the precoding vector is performed commonly for all bands.

Fig.8 shows mutual relationship among three communication modes prepared in the present embodiment. The communication mode is a reference mode, a non-CDD mode or a CDD mode.

In the reference mode, feedback control of precoding vector is performed commonly for all resource blocks in the system band. Therefore, it is only necessary that the number of the feedback control loops is the number of streams, so that the feedback control overload is reduced. However, this mode is not preferable for a channel state in which fading variation in the frequency direction is large. In the reference mode, the CDD scheme is not used. Whether CDD scheme is used or not is represented as τ≠0 or τ=0 in the figure.

In the non-CDD mode, feedback control of the precoding vector is performed for each of bands which are divided from the system band (for example, when the system band includes 25 resource blocks, the control is performed for each band of 5 resource blocks). Therefore, the necessary number of the feedback control loops become the number obtained by (the number of streams) x (the number of total resource blocks ÷ predetermined number). Thus, the feedback control overload becomes relatively large. However, this mode can properly support the channel state in which fading variation in the frequency direction is large.

In the CDD mode, like the reference mode, feedback control of the precoding vector is performed commonly for all resource blocks in the system band. Further, in the CDD mode, cyclic delay diversity is used, so that a delay amount τ is set on the signal routes to each antenna.

These communication modes may be switched with each other as necessary depending on the situation. In the present embodiment, especially, a communication mode is selected according to the downlink data amount. When the downlink data amount is relatively large, the non-CDD mode is used. Thus, the non-CDD mode is suitable for a case in which communication of relatively large data amount is performed when mobility is small, for example. In the non-CDD mode, mainly, precoding vector is finely controlled every 5 resource blocks in the frequency direction, so that control is performed such that transmission quality improves. On the other hand, for example, when the downlink data amount is relatively small like voice packets, the reference mode or the CDD mode is used. In an environment in which visibility is not good, for example, in an urban area, since delay spread of multipath is relatively large, the CDD scheme is not used, but the reference mode is used. For example, in an environment in which visibility is good, the delay spread is relatively small. In this case, in order to enhance effects of diversity using a plurality of paths and improve signal quality, the CDD mode is used such that signal transmission time becomes different for each antenna. The reference mode or the CDD mode is suitable for the case in which mobility is large and the case in which data amount is relatively small like voice packets.

Even when the data amount is relatively small, it can be theoretically considered to finely control the precoding vector every 5 resource blocks in the frequency axis. However, both of control of the precoding vector and control of the delay amount in the CDD scheme result in control of a phase rotation amount in the frequency domain. Therefore, usefulness for preparing a complex communication mode for performing the both controls is small. In addition, it is not a good policy to force large feedback control overload in communication of small data amount like voice packets from the viewpoint of efficient use of resources. Therefore, a communication mode indicated as "x" in Fig.8 is not prepared. In the present embodiment, although the feedback control of the precoding vector is performed based on an option between two, that is, it is performed every 5 resource blocks or not, more options may be prepared. For example, more than two options for "every predetermined number of resource blocks" may be prepared such as every 3 resource blocks, every 5 resource blocks, and common to all resource blocks. Similarly, as to the delay amount, more than two options may be prepared.

In step S3 in Fig.7, the base station apparatus (eNB) selects a communication mode according to the downlink communication amount reported from the user apparatus, and reports the selected communication mode to the user apparatus. In response to that, the user apparatus makes preparations for performing downlink communication in the specified communication mode.

In step S4, the user apparatus returns a feedback signal of the precoding vector to the base station apparatus.

Fig.9 is a diagram showing contents in the feedback signal sent to the base station apparatus from the user apparatus. The feedback signal in "non-CDD mode" includes optimal precoding vectors every 5 resource blocks, and channel states (CQI, for example) for each stream anticipated if the precoding vector is used.

In the "reference mode or CDD mode", contents in the feedback signal are different as indicated by (A), (B) and (C) in the figure depending on whether precoding vector or delay amount is uniquely specified from the base station apparatus or is provided as options.
(A) When precoding vector and delay amount are reported from the base station apparatus to the user apparatus as a plurality of options, the user apparatus selects an optimum option from the options. The feedback signal includes an optimum precoding vector, an optimal delay amount (represented as indicator), and a channel state anticipated if the precoding vector and the delay amount are used. The channel state is represented as an average value for all streams.
(B) Also when precoding vectors are reported as a plurality of options and the delay amount is uniquely reported from the base station apparatus to the user apparatus, the user apparatus determines an optimal option from them. The feedback signal includes an optimal precoding vector, and a channel state anticipated if the precoding vector and the uniquely specified delay amount are used. The channel state is represented as an average value for all streams.
(C) When a precoding vector and a delay amount are uniquely reported from the base station apparatus to the user apparatus, the feedback signal includes a channel state anticipated if the precoding vector and the delay amount are used. The channel state is represented as an average value for all streams.

In step S5 in Fig.7, downlink data communication is performed with the determined precoding vector and the delay amount as necessary. After that, when the downlink communication desired by the user changes, the request is reported to the base station apparatus. Then, the communication mode may be re-determined.

As described above, while the present invention is described with reference to specific embodiments, the respective embodiments are merely exemplary, so that a skilled person will understand variations, modifications, alternatives, and replacements. While specific numerical value examples are used to facilitate understanding of the present invention, such numerical values are merely examples, so that any appropriate value may be used unless specified otherwise. For convenience of explanation, while the apparatus according to the embodiments of the present invention is explained using functional block diagrams, such an apparatus as described above may be implemented in hardware, software, or a combination thereof. The present invention is not limited to the above embodiments, so that variations, modifications, alternatives, and replacements are included in the present invention without departing from the spirit of the present invention.

The present international application claims priority based on Japanese patent application No.2007-073726, filed in the JPO on March 20, 2007 and the entire contents of the Japanese patent application No.2007-073726 is incorporated herein by reference.

## Claims

1. A base station apparatus used in a mobile communication system that supports multiple antenna communication using a precoding scheme, and supports communication performing delay diversity, comprising:
a scheduling unit configured to determine resources to be assigned to one or more users requesting downlink communication;
a unit configured to determine a precoding vector applied to a plurality of antennas according to a feedback signal from each user apparatus;
a communication scheme determination unit configured to determine for each user whether to perform feedback control of precoding vector every predetermined number of resource blocks according to a downlink data amount requested by each user; and
a unit configured to transmit a downlink signal from the plurality of antennas using resources determined by the scheduling unit,
wherein, when the feedback control of precoding vector is performed commonly for resource blocks in a system band, the communication scheme determination unit determines whether to use delay diversity for downlink communication.

2. The base station apparatus as claimed in claim 1, wherein the precoding vector is reported to the user apparatus by a broadcast channel.

3. The base station apparatus as claimed in claim 2, wherein the precoding vector reported by the broadcast channel is represented as a plurality of options of precoding vectors that may be used in the user apparatus.

4. The base station apparatus as claimed in claim 3, wherein a precoding vector selected by the user apparatus from among the plurality of options is reported to the base station apparatus.

5. The base station apparatus as claimed in claim 2, wherein the precoding vector reported by the broadcast channel uniquely indicates a precoding vector that should be used by the user apparatus.

6. The base station apparatus as claimed in claim 1, wherein the delay amount used in the delay diversity is reported to the user apparatus by the broadcast channel.

7. The base station apparatus as claimed in claim 6, wherein the delay amount reported by the broadcast channel is represented as a plurality of options of delay amounts that may be used in the user apparatus.

8. The base station apparatus as claimed in claim 7, wherein a delay amount selected by the user apparatus from among the plurality of options is reported to the base station apparatus.

9. The base station apparatus as claimed in claim 6, wherein the delay amount reported by the broadcast channel uniquely indicates a delay amount that should be used by the user apparatus.

10. The base station apparatus as claimed in claim 1, wherein an estimated value of received signal quality in the user apparatus is reported to the base station apparatus, wherein the estimated value is one anticipated if at least the precoding vector reported by the broadcast channel is used in the user apparatus.

11. A user apparatus used in a mobile communication system that supports multiple antenna communication using a precoding scheme, and supports communication performing delay diversity, comprising:
a unit configured to receive a downlink control signal to specify resources assigned to the user apparatus;
a unit configured to receive a downlink data signal using the specified resources;
a unit configured to measure received quality of a downlink reference signal and transmit a feedback signal for precoding to the base station apparatus,
wherein whether to perform feedback control of precoding vector every predetermined number of resource blocks is determined by the base station apparatus for each user according to downlink data amount requested by each user, and
when the feedback control of precoding vector is performed commonly for resource blocks in a system band, whether to use delay diversity for downlink communication is determined by the base station apparatus.

12. A method used in a mobile communication system that supports multiple antenna communication using a precoding scheme, and supports communication performing delay diversity, comprising:
a step of determining, by a base station apparatus, resources to be assigned to one or more users requesting downlink communication;
a step of determining a precoding vector applied to a plurality of antennas according to a feedback signal from each user apparatus;
a step of transmitting a downlink signal from the plurality of antennas using resources determined by scheduling,
wherein whether to perform feedback control of precoding vector every predetermined number of resource blocks is determined by the base station apparatus for each user according to downlink data amount requested by each user, and
when the feedback control of precoding vector is performed commonly for resource blocks in a system band, whether to use delay diversity for downlink communication is determined by the base station.
